# DEMANDE DE BREVET EUROPEEN

(11) **EP 0 847 120 A2**
(43) Date de publication de la demande: **10.06.1998**
(21) Numéro de dépôt: 97402953.0
(22) Date de dépôt: 05.12.1997
(51) Int. Cl.: H02B 1/38

(54) **Armoire étanche pour le réseau urbain d'alimentation en énergie électrique et/ou électromagnétique**

(30) Priorité: 09.12.1996 EP 96440109
(71) Demandeur: BARAT S.A., 41110 Saint Aignan (FR)
(72) Inventeur: Provost, Christian, Couddes, 41700 Contres (FR)
(74) Mandataire: Armengaud Ainé, Alain

(57) **Abrégé**

Armoire étanche escamotable pour le réseau urbain d'alimentation en énergie électrique et/ou électromagnétique.

Elle comprend un coffre fermé par une porte (2) articulée sur ledit coffre, ladite porte (2) comportant sur son bord périphérique interne un joint d'étanchéité (22) et sur sa face externe une poignée centrale (24) coopérant avec un jeu de bielles (4,41,42,45,47) solidarisées sur la face interne de ladite porte (2) et permettant d'actionner en pivotement une multiplicité de doigts (48), chacun autour d'un axe (44) perpendiculaire au plan de ladite porte (2), et chacun destiné à exercer une pression, lors de leur pivotement, sur le bord interne du coffre par l'intermédiaire d'une butée présentant une face inclinée (50) par rapport audit bord, de manière à rapprocher le bord de la porte (2) et le bord du coffre tout en comprimant le joint d'étanchéité (22) entre lesdits bords.

## Description

La présente invention a pour objet une armoire étanche escamotable pour réseau urbain d'alimentation en énergie électrique et/ou électromagnétique.

Les armoires pour réseau urbain abritent des matériels électriques ou optiques assurant la connexion de câbles électriques ou de fibres optiques pour courants faibles ou forts, et des appareillages électriques et/ou électroniques destinés en particulier à la gestion des feux de signalisation, à la transformation de l'énergie électrique et notamment au redressage du courant électrique. Ces armoires sont généralement disposées à l'extérieur, sur des voies publiques ou privées.

Toutefois le fait d'avoir des armoires disposées à l'extérieur est inesthétique et va à l'encontre de l'aménagement urbain actuel. En outre ces armoires présentent l'inconvénient d'être facilement accessibles à des personnes non autorisées et peuvent entraîner des risques d'accidents pour les usagers. Enfin les armoires extérieures sont exposées aux projections de liquides provenant des engins de nettoyage des trottoirs ou encore des engins de goudronnage.

Pour remédier à ces inconvénients on a proposé de disposer les armoires dans des chambres enterrées du génie civil fermées par une trappe munie d'une serrure.

Le document FR-A-9514622, au nom de la demanderesse, décrit une chambre enterrée, fermée par une trappe articulée sur la face interne de laquelle est solidarisée par son fond une armoire renfermant des connexions électriques. Le document FR-A-2680609 décrit une armoire électrique pour manifestations épisodiques sur la voie publique, telles que marchés et fêtes foraines, montée mobile dans une cavité ménagée dans le sol, entre une position d'utilisation et une position de non-utilisation dans laquelle ladite armoire est entièrement logée dans la cavité, fermée par une plaque montée pivotante autour d'un axe horizontal disposé au voisinage du sol.

Cependant, ces armoires ne permettent pas d'isoler les différents matériels de connectique inerte ou active et/ou les appareils électroniques ou électriques qu'elles contiennent, des agressions physico-chimiques, électromagnétiques ou autres, et elles ne sont pas étanches à l'eau d'infiltration.

La présente invention a pour but de remédier à ces inconvénients en proposant une armoire escamotable étanche aux agressions physico-chimiques, électromagnétiques ou autres, et à l'eau qui s'infiltre dans les chambres enterrées du génie civil, dans lesquelles elle est plus particulièrement destinée à être placée.

L'armoire selon la présente invention se caractérise essentiellement en ce qu'elle comprend un coffre fermé par une porte articulée sur ledit coffre, ladite porte comportant sur son bord périphérique interne un joint d'étanchéité et sur sa face externe une poignée centrale coopérant avec un jeu de bielle solidarisées sur la face interne de ladite porte et permettant d'actionner en pivotement une multiplicité de doigts, chacun autour d'un axe perpendiculaire au plan de ladite porte, et chacun destiné à exercer une pression, lors de leur pivotement, sur le bord interne du coffre par l'intermédiaire d'une butée présentant une face inclinée par rapport audit bord, de manière à rapprocher le bord de la porte et le bord du coffre tout en comprimant le joint d'étanchéité entre lesdits bords.

La porte de l'armoire selon l'invention est avantageusement articulée sur ledit coffre par deux couples de bielles, chaque couple étant articulé d'une part à la face interne de la porte non loin de ses bords latéraux, et d'autre part à une face interne latérale du coffre, ce qui permet d'amener ladite porte en position de fermeture du coffre dans un déplacement sensiblement perpendiculaire au fond dudit coffre ce qui évite d'abîmer le joint d'étanchéité.

Selon un mode de réalisation préférentiel de l'invention, le jeu de bielles de la porte est constitué de deux bielles transversales articulées chacune par l'une de ses extrémités à l'extrémité d'une biellette centrale montée pivotante autour d'un axe central solidarisé perpendiculairement à la face interne de la porte, susceptible d'être actionnée en rotation autour dudit axe par la poignée, tandis que les autres extrémités des bielles transversales sont articulées chacune à une biellette latérale montée pivotante autour d'un axe solidarisé centralement à proximité de l'un des bords internes longitudinaux de ladite porte, perpendiculairement à sa face interne, ladite biellette latérale étant également articulée autour d'un axe solidarisé à une bielle longitudinale parallèle audit bord longitudinal et étant munie d'un doigt pivotant autour de son axe de solidarisation à la face interne de la porte. Les extrémités libres des bielles longitudinales sont articulées chacune a une biellette montée pivotante autour d'un axe solidarisé à la même distance du bord périphérique de la porte que l'axe de rotation de la biellette du milieu et comportent chacune un doigt parallèle au doigt des biellettes de milieu, susceptible d'être animé du même mouvement de rotation dans un plan parallèle au plan de la porte.

La porte de l'armoire étanche selon l'invention peut avantageusement être munie d'une valve pour l'injection d'air sec, et d'une soupape de surpression permettant de tarer la pression intérieure du contenant et la mise à l'air libre avant ouverture.

Les avantages et les caractéristiques de la présente invention ressortiront plus clairement de la description qui suit et qui se rapporte au dessin annexé, étant entendu que cette description ne présente aucun caractère limitatif vis-à-vis de l'invention.

Dans le dessin annexé :
- la figure 1 représente une vue latérale de l'armoire étanche selon l'invention, porte ouverte.
- la figure 2 représente une vue de face de la même armoire étanche, porte ouverte.
- la figure 3 représente une vue latérale de la même armoire étanche, porte fermée.
- la figure 4 représente une vue de face de la face interne de la porte de l'armoire étanche selon l'invention.
- la figure 5 représente une vue de détail de la face interne de la porte de la même armoire étanche.
- la figure 6 représente une vue en perspective partielle de l'armoire selon l'invention.
- la figure 7 représente une vue de profil de l'armoire étanche selon l'invention disposée dans une chambre enterrée du génie civil.
- la figure 8 représente une vue de face de la face interne de la porte de l'armoire étanche selon l'invention, selon un autre mode de réalisation.
- la figure 9 représente une vue de détail de la face interne de la porte de la même armoire étanche, au niveau du système de verrouillage.
- la figure 10 est une vue en coupe et en élévation frontale illustrant le système de verrouillage de la porte sur le boîtier.
- la figure 11 est une vue en en coupe et en élévation latérale du système de verrouillage à galet.
- la figure 12 est une vue en coupe et en détail de la zone de maintien du joint d'étanchéité.
- la figure 13 est une vue en détail au niveau du boîtier dans la zone de maintien du joint d'étanchéité.

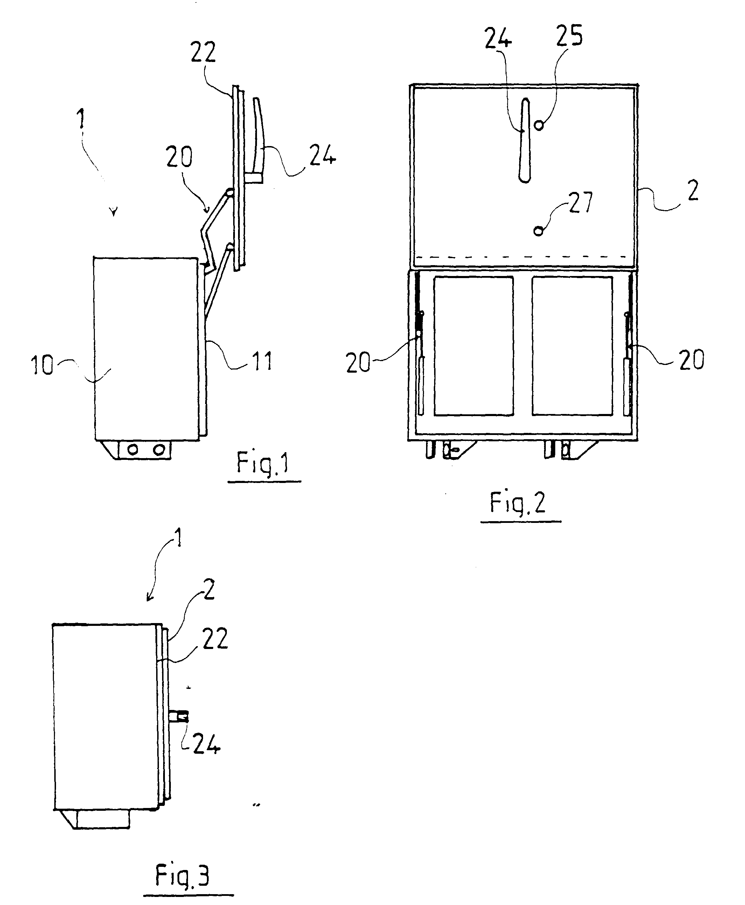

Si on se réfère aux figures 1, 2 et 3 on peut voir qu'une armoire étanche 1 selon l'invention est constituée d'un coffre 10 de forme parallélépipédique rectangle fermé par une porte 2 articulée sur la face ouverte 11 dudit coffre par des biellettes 20 et munie d'une poignée centrale 24.

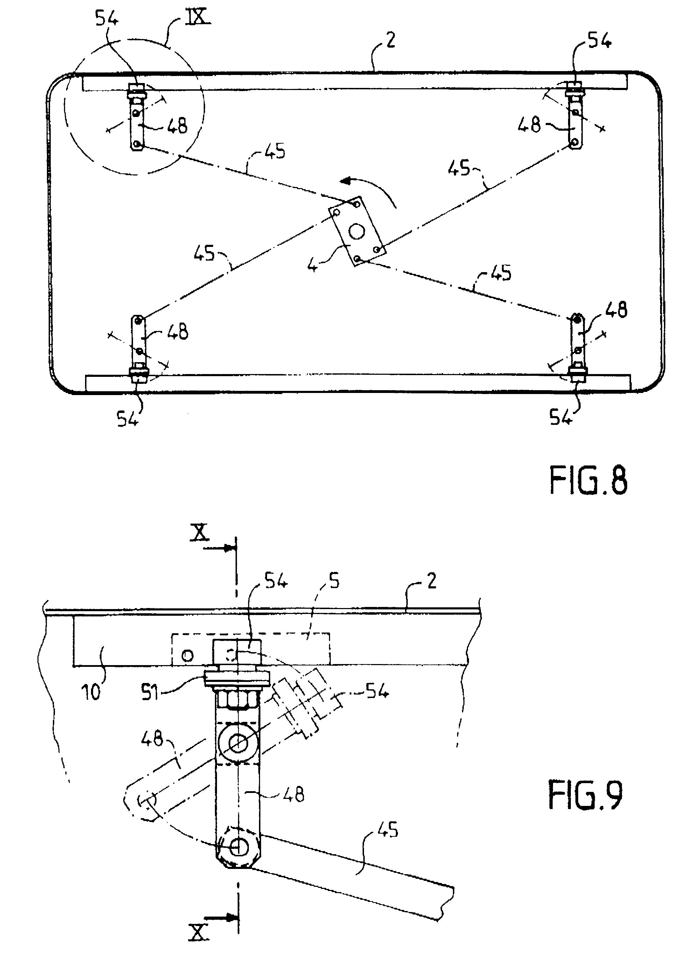

La porte 2 comporte (cf figure 8) sur son bord périphérique interne 21 un joint d'étanchéité 22 destiné à venir en appui contre le bord externe 12 du coffret 10, la section du bord périphérique du coffret 10 étant en forme de L et celle de la porte 2 en forme de L inversé.

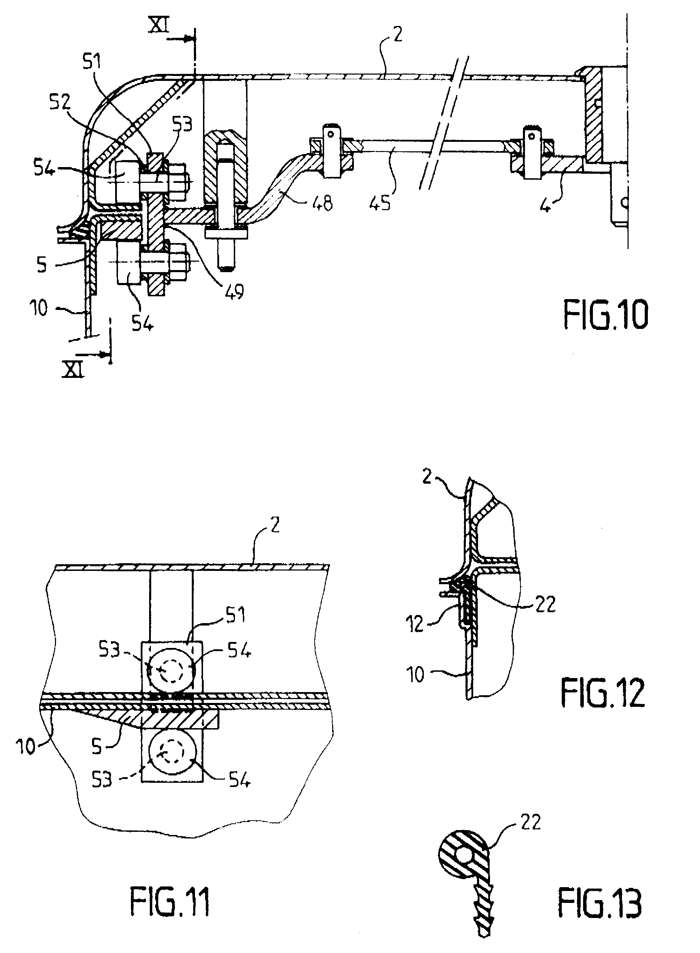

Avantageusement, on prévoit de disposer entre le bord externe 12 du coffret 10 et le bord interne périphérique de ce même boîtier 10 une fente de manière à permettre le passage d'une lèvre faisant saillie latéralement sur un joint d'étanchéité 22. On se reportera à la figure 12.

On peut voir également que la face avant de la porte 2, visible sur la figure 2, comporte une valve 25 permettant d'injecter de l'air sec, et qu'une soupape de surpression 27 permet de tarer la pression intérieure du contenant et la mise à l'air libre avant ouverture.

Si on se réfère maintenant à la figure 4, on peut voir que la face interne 23 de la porte 2 comporte un jeu de bielles, et que la poignée centrale 24 permet de faire pivoter une biellette centrale 4 par l'intermédiaire d'un axe 40 solidarisé centralement et perpendiculairement à la face interne 23 de la porte 2. La biellette 4 est articulée par chacune de ses deux extrémités aux extrémités de deux bielles transversales 41, dont chaque autre extrémité est articulée à un angle d'une plaquette 42 de forme sensiblement triangulaire. Les deux autres angles de la plaquette 42 sont articulés, l'un à un axe 43 solidarisé perpendiculairement à la face interne 23 de la porte 2, à proximité de son bord longitudinal interne 25 recouvert du joint 22, et l'autre à une bielle 45 longitudinale articulée par chacune de ses deux extrémités à une biellette 47 montée pivotante autour d'un axe 44 solidarisé à la face interne 23 de la porte non loin du bord longitudinal 25 correspondant et du bord latéral 26 adjacent. Les biellettes situées près des bords longitudinaux 25 comportent chacune un doigt 48 qui pivote avec elles autour de leur axe de pivotement 44.

Selon une caractéristique avantageuse de l'invention, (cf figures 10 et 11), le doigt 48 est conformé en " S " et dispose à l'une de ses extrémités 49 d'une patte ou d'une platine 51 dans une position sensiblement perpendiculaire à l'axe longitudinal du doigt 48, cette platine 51 étant munie par ailleurs d'orifices 52, dans lesquels des axes 53 sont montés de manière à supporter dans une position sensiblement parallèle à la platine 51 des galets 54.

Ces galets 54 sont montés tournant sur les axes 53 et coopèrent d'une part respectivement au niveau d'une face 50 d'une butée 5 positionnée sur le bord interne périphérique du coffret 10 et d'autre part, sur le bord interne périphérique de la porte 2.

Le joint 22 est avantageusement réalisé en élastomère de manière à résister aux hydrocarbures et comprend des particules métalliques formant un écran aux inductions électromagnétiques.

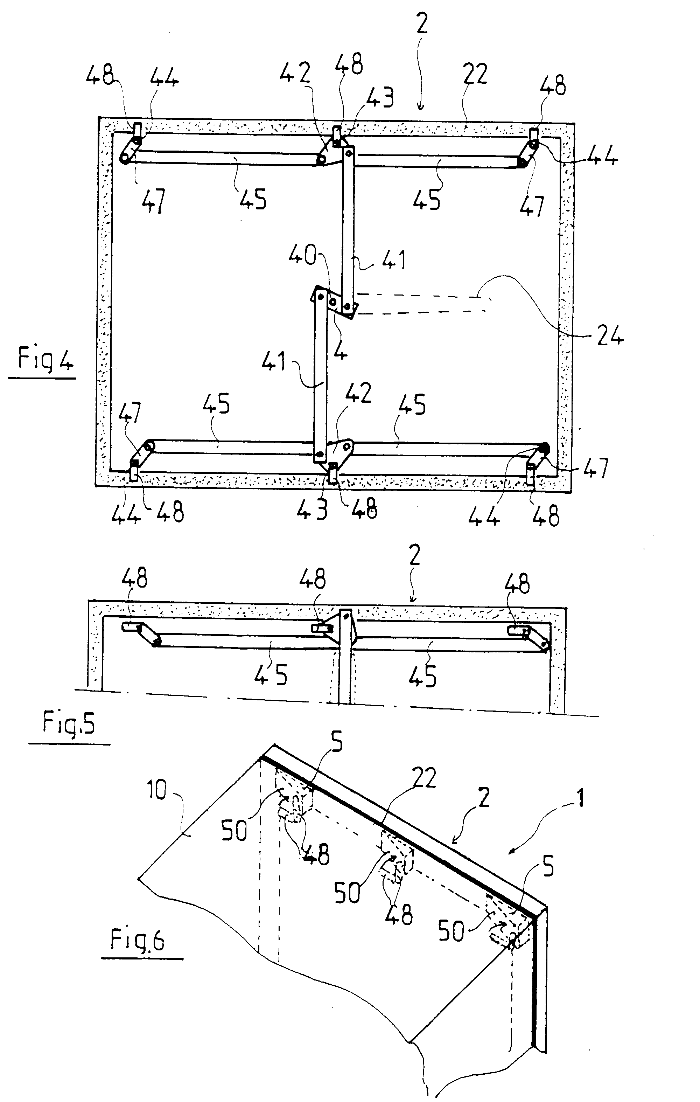

Si on se réfère aux figures 5 et 6, on peut voir qu'un pivotement de la poignée 24 entraîne une rotation de 90° des doigts 48, ce qui permet de fermer la porte 2 contre la face avant du coffret 1, comme on peut le voir sur les figures 6 et 10. Le pivotement de la poignée en sens inverse de 90° entraîne la rotation des doigts 48 de la platine 51 portant les galets 54 qui viennent chacun en butée contre la face 50 d'une butée 5 inclinée par rapport à la face du bord interne périphérique du coffret 10 et contre le bord interne périphérique de la porte 2, ce qui a pour effet de serrer la porte 2 contre le coffre 10 et de comprimer le joint entre les deux.

L'ouverture de la porte 2 peut avantageusement être facilitée par un mécanisme assisté du type par exemple vérins à air comprimé, non représentés.

Les entrées des câbles de connexion ne sont pas représentées mais l'étanchéité à leur niveau peut être réalisée par tout moyen connu tel qu'un presse étoupe étanche à l'immersion.

L'armoire 1 selon l'invention sera avantageusement réalisée en aluminium, en inox ou en matériau composite et les parois intérieures revêtues d'un enduit absorbant anti-condensation.

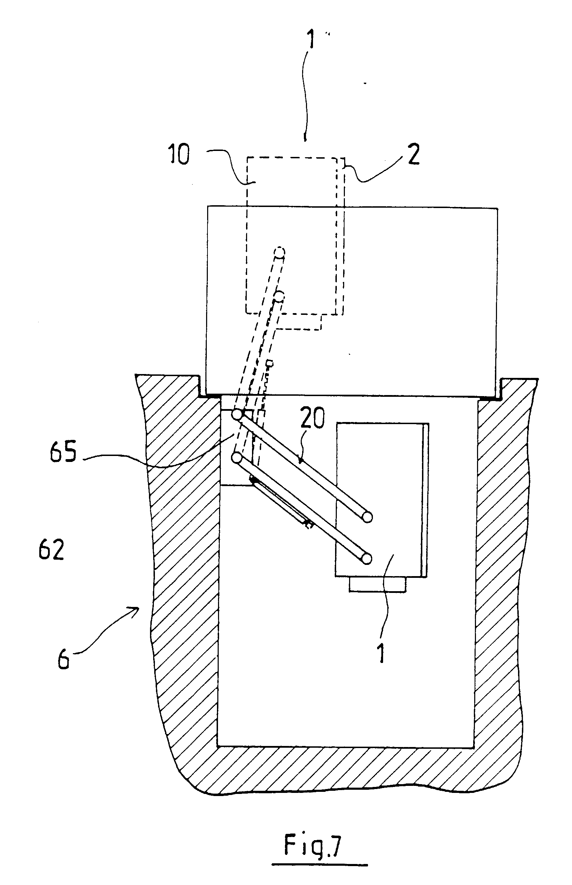

Si on se réfère à la figure 7, on peut voir un ouvrage du génie civil 6 équipé d'une trappe 60 montée pivotante autour d'un axe horizontal 61, dans lequel est disposée une armoire 1 selon l'invention articulée sur une paroi verticale 62 de l'ouvrage 6 par l'intermédiaire de deux couples de bielles 64, dont l'un seulement est visible sur la figure, montées pivotantes d'une part sur l'une des faces externes de l'armoire 1 et d'autre part sur un châssis 65 solidarisé à la paroi 62 de l'ouvrage 6, chaque couple de bielles 64 se déplaçant de manière à maintenir constamment l'armoire 1 en position verticale.

L'armoire selon l'invention peut avantageusement être équipée d'un dispositif de mesure de l'hygrométrie. Le système de fermeture en plusieurs points de la porte 2 par la pression exercée par les doigts 48 tout le long des bords longitudinaux du coffre 1 et de la porte 2 permet d'assurer à la fermeture de l'armoire une excellente étanchéité. L'armoire selon l'invention est particulièrement adaptée pour le secteur des télécommunications.

## Revendications

1. Armoire étanche (1) pour le réseau urbain d'alimentation en énergie électrique et/ou électromagnétique, caractérisée en ce qu'elle comprend un coffre (10) fermé par une porte (2) articulée sur ledit coffre (10), ladite porte (2) comportant sur son bord périphérique interne un joint d'étanchéité (22) et sur sa face externe une poignée centrale (24) coopérant avec un jeu de biellettes (4,41,42,45,47) solidarisées sur la face interne de ladite porte (2) et permettant d'actionner en pivotement une multiplicité de doigts (48), chacun autour d'un axe (44) perpendiculaire au plan de ladite porte (2), et chacun destiné à exercer une pression, lors de leur pivotement, sur le bord interne du coffre (10) par l'intermédiaire d'une butée (5) présentant une face inclinée (50) par rapport audit bord, de manière à rapprocher le bord de la porte (2) et le bord du coffre (10) tout en comprimant le joint d'étanchéité (22) entre lesdits bords.

2. Armoire étanche selon la revendication 1, caractérisée en ce que le doigt (48) dispose à l'une de ses extrémités (49) d'une patte ou d'une platine (51) dans une position sensiblement perpendiculaire à l'axe longitudinal du doigt (48), cette platine (51) étant munie par ailleurs d'orifices (52), dans lesquels des axes (53) sont montés de manière à supporter dans une position sensiblement parallèle à la platine (51) des galets (54).

3. Armoire étanche selon l'une des revendications 1 ou 2, caractérisée en ce que les galets (54) sont montés tournant sur les axes (53) et coopèrent d'une part respectivement au niveau d'une face (50) de la butée (5) positionnée sur le bord interne périphérique du coffret (10) et d'autre part, sur le bord interne périphérique de la porte (2).

4. Armoire étanche (1) selon l'une quelconque des revendications précédentes, caractérisée en ce que la porte (2) est articulée sur ledit coffre (10) par deux couples de bielles (20), chaque couple (20) étant articulé d'une part à la face interne de la porte non loin de ses bords latéraux, et d'autre part à une face interne latérale du coffre (10), ce qui permet d'amener ladite porte (2) en position de fermeture du coffre (10) dans un déplacement sensiblement perpendiculaire au fond dudit coffre (10).

5. Armoire étanche (1) selon l'une quelconque des revendications précédentes, caractérisée en ce que le jeu de bielles (4,41,42,45,47) solidarisées sur la face interne de la porte (2) permettant d'actionner en pivotement la multiplicité de doigts (48) est constitué de deux bielles transversales (41) articulées chacune par l'une de ses extrémités à l'extrémité d'une biellette (4) montée pivotante autour d'un axe central (40) solidarisé perpendiculairement à la face interne (23) de la porte (2), susceptible d'être actionnée en rotation autour dudit axe (40) par la poignée centrale (24), tandis que les autres extrémités des bielles transversales (41) sont articulées chacune à une biellette latérale (42) montée pivotante autour d'un axe (43) solidarisé centralement à proximité de l'un des bords internes longitudinaux de ladite porte (2), perpendiculairement à sa face interne (23), ladite biellette latérale (42) étant également articulée autour d'un axe solidarisé à une bielle longitudinale (45) parallèle audit bord longitudinal et étant munie d'un doigt (48) pivotant autour de son axe de solidarisation (43) à la face interne de la porte et en ce que les extrémités libres des bielles longitudinales (45) sont articulées chacune à une biellette (47) montée pivotante autour d'un axe (44) solidarisé à la même distance du bord périphérique de la porte que l'axe de rotation (43) de la biellette (42) du milieu et comportent chacune un doigt (48) parallèle au doigt (48) des biellettes (42) de milieu susceptibles d'être animé du même mouvement de rotation dans un plan parallèle au plan de la porte (2).

6. Armoire étanche (1) selon l'une quelconque des revendications précédentes, caractérisée en ce que la porte (2) est munie d'une valve (25) pour l'injection d'air sec, et d'une soupape de surpression (27) permettant de tarer la pression intérieure du contenant et la mise à l'air libre avant ouverture.

7. Armoire étanche (1) selon l'une quelconque des revendications précédentes, caractérisée en ce qu'elle est réalisée en aluminium, en inox ou en matériau composite et en ce que les parois intérieures sont revêtues d'un enduit absorbant anti-condensation.

8. Armoire étanche (1) selon l'une quelconque des revendications précédentes, caractérisée en ce que le joint (22) est réalisé en élastomère.

9. Armoire étanche (1) selon l'une quelconque des revendications précédentes, caractérisée en ce que le joint (22) comprend des particules métalliques formant un écran aux inductions électromagnétiques.

10. Armoire étanche (1) selon l'une quelconque des revendications précédentes, caractérisée en ce que équipée d'un dispositif de mesure de l'hygrométrie.

11. Armoire étanche (1) selon l'une quelconque des revendications précédentes, caractérisée en ce que le joint d'étanchéité (22) comporte une lèvre qui fait saillie latéralement et qui coopère au niveau d'une fente prévue entre le bord externe (12) du coffret (10) et le bord interne périphérique de ce même boîtier (10).
